# EUROPEAN PATENT SPECIFICATION

(11) **EP 2 629 957 B1**
(45) Date of publication and mention of the grant of the patent: **17.08.2016**
(21) Application number: 11797110.1
(22) Date of filing: 21.10.2011
(51) Int. Cl.: B29C 49/78, B29L 24/00

(54) **Process and apparatus for the production of blown double walled containers**
Verfahren und Vorrichtung zur Herstellung von blasgeformten doppelwandigen Behältern
Procédé et appareil pour la production de récipients soufflés à double paroi

(30) Priority: 21.10.2010 IT RM20100562
(43) Date of publication of application: 28.08.2013
(73) Proprietor: Siapi S.r.l., 31020 SAn Vendemiano (IT)
(72) Inventor: COMPER, Lucia, 31020 SAN VENDEMIANO (TV) (IT)
(74) Representative: Leone, Mario
(86) International application number: PCT/IB2011/002521
(87) International publication number: WO 2012/052836

(56) References cited:
- DE-A1-102008 013 419
- FR-A- 1 244 287
- JP-A- 6 055 622
- JP-A- 2000 062 013

## Description

### DESCRIPTION

### Field of the Invention

The present invention relates to a process and an apparatus according to the preamble of claim 1, for producing containers from blown preforms and, more specifically to a process and an apparatus for the production of double-walled containers obtained from two and preforms inserted one inside the other.

The present invention finds particular application in the field of linear blow molding machines for PET bottles, and/or polypropylene, a combination thereof, or multilayer blown container.

### State of the Art

To date, several methods are already known and / or apparatus for molding / blow molding of containers starting from preforms. Document DE 10 2008 013 419 A1 or document JP 2000 062013 discloses the preamble of claim 1 and its use.

In particular, there is a known technology so-called "bottle to bottle" which relates the production of double-walled containers. According to this technology, there is provided the blowing of two preforms placed one inside the other at the same time, and within a forming mould, and with the aim of obtaining a container having a thickness which is constituted of a double wall.

This solution is particularly used for products that require an effective barrier agents such oxygen, carbon dioxide, and light, i.e. such as the beer, fruit-based juices, food, and products currently used in metal cans with the presence of gas for the easy pouring of the product itself.

From this technology, however, some drawbacks were found with regard to process safety, since it has been found that the inner preform may break inside the bottle during the blowing step inside the mould. In this condition, the evacuation of the blown air will be inhibited, and the air being at pressures values of about 40 bar.

Consequently, at the end of the cycle, the apparatus receives the signal coming from the control unit for the opening of the mold, but at the same time the bottle is still under pressure. This of course leads to a safety problem. The consequence of this is the stop of the production cycle for the removal of obstruction involving the failure, and in order to spill the gas from the container inside the mold.

Therefore, the aim of the present invention is to solve the abovementioned drawbacks.

### Brief description of the invention

The present invention provides a process with the features of claim 9 for the production of blown containers

A further object of the present invention is to provide an apparatus with the features of claim 1 to perform the above processes for the production of blown containers starting from preforms.

Thus, the present invention provides a process and an apparatus for producing blown containers starting from blown preforms substantially according to the annexed claims.

### Detailed description of the invention

It will now be provided a detailed description of a preferred embodiment of the method and apparatus for the production of double-walled containers according to the present invention, given by way of example and without limiting, with reference to the annexed drawings, wherein:
Figure 1 is a generic perspective view partially illustrating a mold for the production of a double-walled container, according to the present invention;
Figure 2 is a top plan view showing a part of the mold for the production of a double-walled container of Figure 1, and according to the present invention;
Figure 3 is a partial view taken along a longitudinal section of the mold for the production of a double-walled container, according to the present invention;
Figure 4 is a top plan view and partially in section illustrating the mold for the production of a double-walled container according to the present invention, and
Figure 5 is a flowchart of the flow chart operating the process for producing a double-walled container according to the present invention.

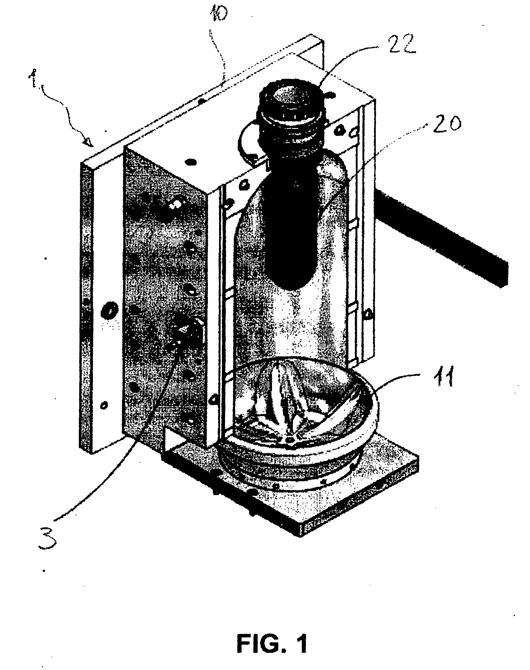

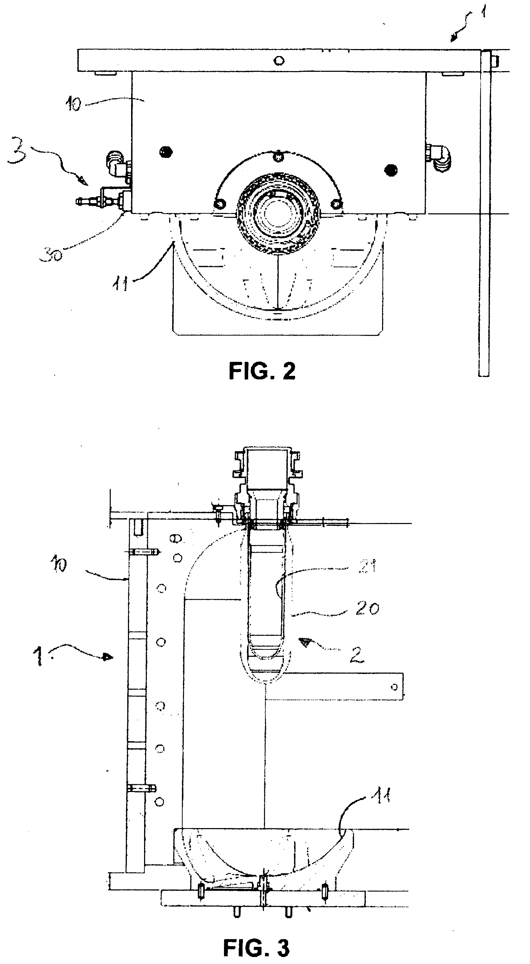

With reference now to Figures 1 to 4, there is partially shown therein a mold for the production of a double-walled container, according to the present invention.

According to the invention, there is provided a mold 1 for the making of a double walled container 2, the latter being constituted starting from a pair of preforms 20 and 21, which are initially placed one inside the other (in figure only being visible the outer preform 20). The mold 1 is composed of half-shells 10 (only one of them being shown) and typically provided with piping and ducts for the temperature control, and for the operation of all the actuators.

In addition, there is a bottom half-shell mold 11 for the forming of the bottom of the container 2.

It has to be pointed out here that the detailed description and operation of all the actuators and all functional components typical for the operating of the mold 1 of the present invention will be here omitted for the sake of clarity, since this function is already known to the skilled men of the related art.

The preforms 20 and 21 are mounted at the top part of the mold 1 on a annular supporting part 22 which acts to support themselves in a coaxial position. It is necessary to point out that according to this arrangement, the preforms are not mutually attached, i.e. the inner preform and the outer preform are simply inserted one into the other.

So, according to the present process, after the preforms 20 and 21 have been mounted onto the annular frame 22 and have been inserted in the relevant half-shell mold 10, there is provided that the mold halves are closed 1 each in a sealed manner, and the blowing of the preforms 20 and 21 is carried out in the provided manner and as already known to reach the final pressure of about 35-40 bar.

After the blow molding and the related forming of the containers internally to mold halves 10 and 11, it is possible to evacuate the blown gas to bring the mold 1 at room pressure and then open it for extracting the so formed container 2 (not shown in the figures).

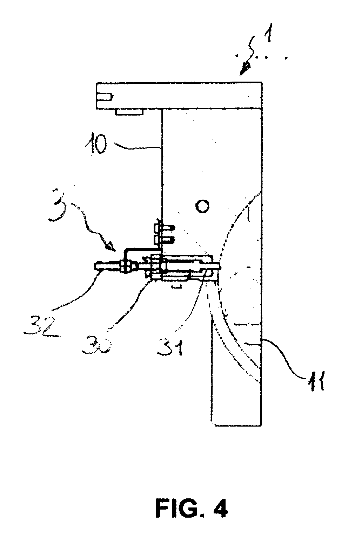

With particular reference now to Figure 4 and according to the present invention, there is provided an additional control device for the controlling of the relevant process and for verifying the integrity of the container 2 at the end of the blowing step and before the opening of the mold 1.

More precisely and according to the invention, there is provided a pressure sensing device 3 for sensing the pressure inside the mold 1 and/or the container 2, and which consists of a pressure transducer 30.

As can be seen in Figure 4, the transducer 30 includes a rod 31 connected with a pressure sensor 32. The shaft 31 is mounted in a sliding manner inside a half-shell mold 11, and the tip of the rod 31 faces inside the mold 1 and at the wall of the container 2 when the latter it is formed. In this way, the tip of the rod 31 is in contact with the wall of the container 2 when it is fully formed inside the mold 1.

Thus, the pressure sensor can be operated in such a way to transmit and detect the movement action to the rod 31, and therefore sensing the pressure or resistance to deform the wall of the container 2.

As will be evident to men skilled in the field of the relevant art, the arrangement of the device 3 is such that the resulting step of sensing the pressure/movement of the rod 31 on the wall of the container 2 after the blowing thereof, and based on the value of resistance that the same wall offers to deformation of the latter, it is determined whether the container 2 is filled with blowing gas or if it is empty. So, based on the value of the signal coming from the transducer 30, can be decided if the opening of the mold 1 can be carried out or not.

Furthermore, according to the present invention, it is advantageously provided that each type of mold 1 (varying according to different forms and applications) be equipped with a identification microchip that incorporates an identification code for the type of blow molding process to carry out. More precisely, the identification code ID can be related to a standard blowing process, or a "bottle to bottle" blowing process type, or for large preforms, or for preforms in a non-standard material, etc.. In all these cases, the apparatus "identifies" the code relevant to the mounted mold, and automatically starts the relevant blowing cycle according to the type of container to be carried out.

The microchip (not shown in the figures) is adapted for "interfacing" with the blowing apparatus through different data transmission technologies, i.e. by means of a simple electrical connection through the circuit, or alternatively "transponder" technology, or wi-fi technology, bluetooth technology, etc..

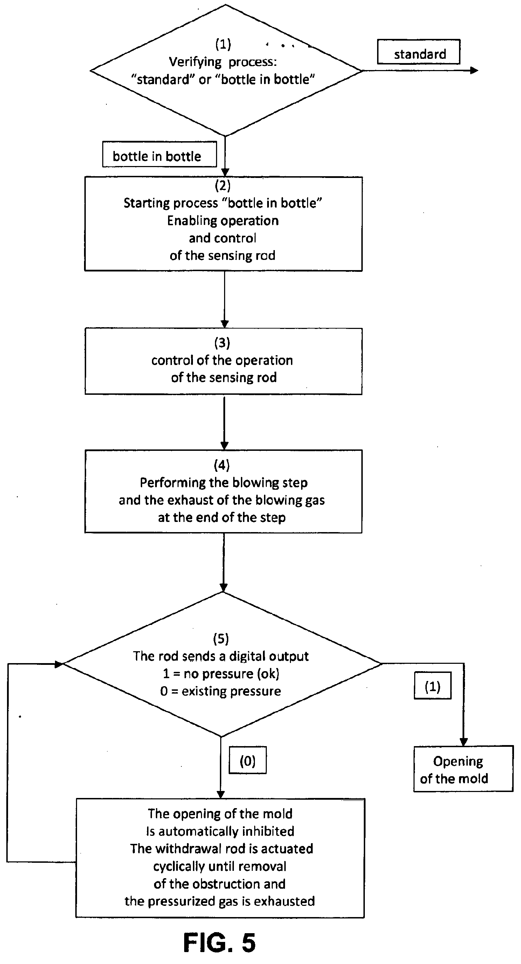

With reference now to Figure 5, it is therein shown a flowchart of the logical steps related to the operation of the whole process according to the present invention. It is necessary here to point out that according to the illustration in Figure 5, the same refers to a process and an apparatus for the blow molding of "bottle in a bottle" containers or "standard bottles", but it will be apparent to the relevant men skilled in the art that the process of present invention may also refer to processes other than shown here below.

Therefore, according to the process of the present invention, there are provided the following steps:
Step (1)
   The apparatus carries out the recognition of the process to be carried out by interfacing with the microchip mounted on the mold 1. For example, the blow molding process recognized can be a "standard bottle", or a "bottle in bottle", or else, etc..
Step (2)
   If identification of process-type "bottle to bottle" is enabled, the operation of the rod 3 and the control thereof is enabled.
Step (3)
   The apparatus runs a control loop of the proper functioning of the mechanical rod 3.
Step (4)
   At the end of the control loop of the rod 3, the blowing step is performed and the relevant exhaust of the blown gas at the end of the step is carried out.
Step (5)
   At the end of the blowing step, the rod unit 3 sends a digital signal of control to the apparatus, the digital signal can be of the following type:
   Value 1 = no pressure in the mold, or
   Value 0 = presence of pressure inside the mold. In the case "0" signal value, the opening of the mold 1 is automatically inhibited, and the obstruction which blocks the escape of pressurized blowing gas is removed by means of the movement of the withdrawal rod. This step can be repeated several times cycling, until the consent of the rod 3 gives a value of "1 ", which authorizes the controller to open the mold 1 of the apparatus.

After the mold 1 is opened, the formed container 2 can be withdrawn and conveyed to the next process steps provided after the formation of the latter, and as already known in the art.

Subsequently, the machine is ready to perform a new production cycle for blowing and forming another container once the relevant preforms (or pair of preforms) are inserted into the open mold.

The present invention is not limited to the shown embodiment, but it also includes different embodiments that fall within the scope of the appended claims.

## Claims

1. Apparatus for the production of a container (2) obtained from the blowing of at least one preform (20) inserted into a mold (1) and by blowing inside thereof a pressurized gas, the mold including at least two half-molds (10), and **characterized in that** it further comprises:
- verifying means (3) for verifying the final status or the value of the final pressure inside of said container (2) inside the mold (1) before the opening of said mold (1),
- controlling means for controlling said verifying means (3), and
- a control unit for controlling said controlling means and said verifying means (3),
the arrangement being such that the opening of the mold (1) occurs only after said control unit receives an enabling signal from said verifying means (3) relevant to the status or the values of the final pressure inside of the container (2).

2. Apparatus for the production of a container (2) obtained from the blowing of at least one preform (20) inserted into a mold (1) according to the preceding claim, further comprising identifying means for identifying the type of container to be formed, said identifying means being arranged onto said mold (1).

3. Apparatus for the production of a container (2) obtained from the blowing of at least one preform (20) inserted into a mold (1) according to claim 1 or 2, wherein said container (2) is a double-walled container, and wherein said at least one preform comprises two preforms (20,21) inserted one inside the other.

4. Apparatus for the production of a container (2) according to any of the preceding claims, wherein said verifying means includes a pressure transducer (30).

5. Apparatus for the production of a container (2) according to the preceding claim, wherein said transducer (30) includes a rod (31) connected with a pressure sensor (32), the arrangement being such that said rod (31) is mounted in a sliding manner inside one half mold (11), and such that one end of said rod (31) is facing inside the mold (1) at a position corresponding to an outer wall of the container (2) after the forming thereof, and in a contacting arrangement with said outer wall of the container (2) only when the latter is fully formed inside the mold (1).

6. Apparatus for the production of a container (2) according to the preceding claim, wherein said transducer (30) detects the pressure value on or the deforming stress value of the outer wall of the container (2).

7. Apparatus for the production of a container (2) according to claims 2-6, wherein said identifying means for identifying the type of container includes an identification microchip incorporating an identification code, which corresponds to the type of blow molding process to achieve.

8. Apparatus for the production of a container (2) according to the preceding claim, wherein said microchip is suitable to communicate with said control unit via a data transmission technology of the type selected from the following group: electrical connection through circuit, transponder technology, Wi-Fi technology, and Bluetooth technology.

9. A process for producing a container (2) obtained from the blowing of at least one preform (20) inserted into a mold (1) and wherein there is provided a blowing apparatus according to claims 2-8, **characterized in that** it comprises the following steps:
- identifying the type of container to be formed by activating said identifying means onto said mold (1);
- enabling and checking the functionality of said verifying means (3) of the status of the final pressure within the container (2) inside the mold (1);
- carrying out the blowing process and exhausting of the gas blown at the end of the blowing operation;
- reading through said verifying means (3) the pressure value inside the mold (1) and/or the container (2), and
- sending a digital signal to said control unit of said apparatus coming from said verifying means (3), said digital signal corresponding to the pressure value read inside the mold (1)
wherein said digital signal can have a first value (value 1) corresponding to an absence of pressurized gas inside the mold, or a second value (value 0) corresponding to the presence of a pressurized gas inside the mold (1),
wherein if the signal value is the second value (value 0), the opening of the mold (1) is automatically blocked, and means are automatically operated for removing an obstruction that blocks the exhausting of said pressurized gas, said removal operation of operating the means for removing is repeated several times by cyclic consensus of said verifying means (3) until the first value (value 1) is obtained through said verifying means (3), and
wherein the opening of said mold (1) is carried out only when said digital signal from such verifying means (3) has the first value (value 1).

10. Process for producing a container (2) obtained from the blowing of at least one preform (20) inserted into a mold (1) according to the preceding claim, wherein said container (2) is a double walled container, and said at least one preform comprises two preforms (20,21) inserted one inside the other.

## Patentansprüche

1. Vorrichtung zur Herstellung eines Behälters (2), der durch Blasen zumindest einer Vorform (20), die in eine Werkzeugform (1) eingebracht ist, und durch Einblasen eines unter Druck stehenden Gases darein erhalten wird, wobei die Werkzeugform zumindest zwei Halbformen (10) umfasst, und **dadurch gekennzeichnet, dass** die Vorrichtung weiterhin umfasst:
- Verifizierungsmittel (3) zum Verifizieren des Endstatus oder des Wertes des endgültigen Drucks innerhalb des Behälters (2) innerhalb der Werkzeugform (1) vor dem Öffnen der Werkzeugform (1),
- Steuerungsmittel zum Steuern der Verifizierungsmittel (3), und
- eine Steuereinheit zur Steuerung der Steuerungsmittel und der Verifizierungsmittel (3),
wobei die Anordnung derart ist, dass das Öffnen der Werkzeugform (1) erst erfolgt, nachdem die Steuereinheit ein Freigabesignal von den Verifizierungsmitteln (3) erhält, das für den Status oder die Werte des endgültigen Drucks innerhalb des Behälters (2) relevant ist.

2. Vorrichtung zur Herstellung eines Behälters (2), der durch das Blasen zumindest einer Vorform (20), die in eine Werkzeugform (1) eingebracht ist, erhalten wird, gemäß dem vorstehenden Anspruch, wobei die Vorrichtung weiter umfasst Identifizierungsmittel zum Identifizieren der Art des Behälters, der zu formen ist, wobei die Identifizierungsmittel auf der Werkzeugform (1) angeordnet sind.

3. Vorrichtung zur Herstellung eines Behälters (2), der durch Blasen zumindest einer Vorform (20), die in eine Werkzeugform (1) eingebracht ist, erhalten wird, gemäß Anspruch 1 oder 2, wobei der Behälter (2) ein doppelwandiger Behälter ist und wobei die mindestens eine Vorform zwei Vorformen (20, 21) umfasst, die ineinander eingebracht sind.

4. Vorrichtung zur Herstellung eines Behälters (2) gemäß einem der vorstehenden Ansprüche, wobei die Verifizierungsmittel einen Druckaufnehmer (30) umfassen.

5. Vorrichtung zur Herstellung eines Behälters (2) gemäß dem vorstehenden Anspruch, wobei der Aufnehmer (30) einen Stab (31), der mit einem Drucksensor (32) verbunden ist, umfasst, wobei die Anordnung so ist, dass der Stab (31) in einer verschiebbaren Weise in einer Halbform (11) montiert ist, und so, dass ein Ende des Stabes (31) in die Werkzeugform (1) an einer Position hinein weist, die mit einer äußeren Wand des Behälters (2) nach dessen Herstellung korrespondiert und in einer Berührungsanordnung mit der äußeren Wand des Behälters (2) nur, wenn der Letztgenannte vollständig in der Werkzeugform (1) geformt ist.

6. Vorrichtung zur Herstellung eines Behälters (2) gemäß dem vorstehenden Anspruch, wobei der Aufnehmer (30) den Druckwert auf die oder den Umformspannungswert der äußeren Wand des Behälters (2) erfasst.

7. Vorrichtung zur Herstellung eines Behälters (2) gemäß den Ansprüchen 2 bis 6, wobei die Identifizierungsmittel zum Identifizieren der Art des Behälters einen Identifikations-Mikrochip einschließen, der einen Identifikationscode enthält, der mit der Art des Blasformverfahrens, das erzielt werden soll, korrespondiert.

8. Vorrichtung zur Herstellung eines Behälters (2) gemäß dem vorstehenden Anspruch, wobei der Mikrochip geeignet ist um mit der Steuereinheit über eine Datenübermittlungstechnologie der Art ausgewählt aus der folgenden Gruppe zu kommunizieren: elektrische Verbindung über Schaltung, Transpondertechnologie, Wi-Fi Technologie und Bluetooth Technologie.

9. Verfahren zur Herstellung eines Behälters (2), der durch Blasen zumindest einer Vorform (20), die in eine Werkzeugform (1) eingebracht ist, erhalten wird, und worin eine Blasvorrichtung vorgesehen ist, nach einem der Ansprüche 2 bis 8, **dadurch gekennzeichnet, dass** dieses die folgenden Schritte umfasst:
- Identifizieren der Art des Behälters, der geformt werden soll, durch Aktivieren der Identifizierungsmittel auf die Werkzeugform (1);
- Freigeben und Überprüfen der Funktionalität der Verifizierungsmittel (3) zu dem Status des endgültigen Drucks innerhalb des Behälter (2) in der Werkzeugform (1);
- Ausführen des Blasprozesses und Ausblasen des Gases, das am Ende des Blasvorgangs geblasen wird;
- Lesen des Druckwertes in der Werkzeugform (1) und/oder dem Behälter (2) durch die Verifizierungsmittel (3), und
- Senden eines digitalen Signals an die Steuereinheit der Vorrichtung, das von den Verifizierungsmitteln (3) stammt, wobei das digitale Signal mit dem Druckwert, der in der Werkezugform (1) gelesen wurde, korrespondiert;
wobei das digitale Signal einen ersten Wert (Wert 1) haben kann, der mit der Abwesenheit von unter Druck stehendem Gas in der Werkezugform (1) korrespondiert, oder einen zweiten Wert (Wert 0), der mit der Vorliegen von unter Druck stehendem Gas in der Werkzeugform (1) korrespondiert, wobei, wenn der Signalwert der zweite Wert (Wert 0) ist, das Öffnen der Werkzeugform (1) automatisch blockiert wird und Mittel zum Entfernen eines Hindernisses, das das Ausblasen des unter Druck stehenden Gases blockiert,
automatisch betätigt werden, wobei der Entfernungsvorgang des Betätigen der Mittel zum Entfernen durch zyklischen Konsensus der Verifizierungsmittel (3) mehrmals wiederholt wird bis der erste Wert (Wert 1) durch die Verifizierungsmittel (3) erhalten wird, und
wobei das Öffnen der Werkzeugform (1) nur durchgeführt wird, wenn das digitale Signal von den Verifizierungsmitteln (3) den ersten Wert (Wert 1) besitzt.

10. Verfahren zur Herstellung eines Behälters (2), der durch das Blasen von zumindest einer Vorform (20), die in eine Werkzeugform (1) eingebracht ist, erhalten wird, gemäß dem vorstehenden Anspruch, wobei der Behälter (2) ein doppelwandiger Behälter ist und die mindestens eine Vorform zwei Vorformen (20, 21) umfasst, die ineinander eingebracht sind.

## Revendications

1. Appareil de fabrication d'un récipient (2) obtenu à partir de l'expansion d'au moins une préforme (20) insérée dans un moule (1) et en soufflant un gaz sous pression à l'intérieur de celui-ci, le moule comprenant au moins deux demi-moules (10), et **caractérisé en ce qu'**il comprend en outre :
- des moyens de vérification (3) pour la vérification de l'état final ou de la valeur de la pression finale à l'intérieur dudit récipient (2) à l'intérieur du moule (1) avant l'ouverture dudit moule (1),
- des moyens de commande pour commander lesdits moyens de vérification (3), et
- une unité de commande pour commander lesdits moyens de commande et lesdits moyens de vérification (3), l'agencement étant tel que l'ouverture du moule (1) se produit seulement après la réception par ladite unité de commande d'un signal de validation provenant desdits moyens de vérification (3) en rapport avec l'état ou les valeurs de la pression finale à l'intérieur du récipient (2).

2. Appareil de fabrication d'un récipient (2) obtenu à partir de l'expansion d'au moins une préforme (20) insérée dans un moule (1) selon la revendication précédente, comprenant en outre des moyens d'identification pour identifier le type de conteneur à former, lesdits moyens d'identification étant disposés sur ledit moule (1).

3. Appareil de fabrication d'un récipient (2) obtenu à partir de l'expansion d'au moins une préforme (20) insérée dans un moule (1) selon la revendication 1 ou 2, dans lequel ledit récipient (2) est un récipient à double paroi, et dans lequel ladite au moins une préforme comprend deux préformes (20, 21) insérée l'une dans l'autre.

4. Appareil de fabrication d'un récipient (2) selon l'une quelconque des revendications précédentes, dans lequel lesdits moyens de vérification comportent un transducteur de pression (30).

5. Appareil de fabrication d'un récipient (2) selon la revendication précédente, dans lequel ledit transducteur (30) comprend une tige (31) reliée à un capteur de pression (32), l'agencement étant tel que ladite tige (31) est montée d'une manière coulissante à l'intérieur d'un demi-moule (11), et tel qu'une extrémité de ladite tige (31) fait face à l'intérieur du moule (1) à une position correspondant à une paroi extérieure du récipient (2) après la formation de celle-ci, et dans un dispositif de mise en contact avec ladite paroi extérieure du récipient (2) seulement lorsque celle-ci est entièrement formée à l'intérieur du moule (1).

6. Appareil de fabrication d'un récipient (2) selon la revendication précédente, dans lequel ledit transducteur (30) détecte la valeur de pression ou la valeur de contrainte de déformation de la paroi extérieure du récipient (2).

7. Appareil de fabrication d'un récipient (2) selon les revendications 2 à 6, dans lequel lesdits moyens d'identification pour identifier le type de récipient comprennent une micropuce d'identification incorporant un code d'identification, qui correspond au type de procédé de moulage par soufflage à obtenir.

8. Appareil de fabrication d'un récipient (2) selon la revendication précédente, dans lequel ladite micropuce est adaptée pour communiquer avec ladite unité de commande par l'intermédiaire d'une technologie de transmission de données du type sélectionné dans le groupe suivant : connexion électrique à travers un circuit, technologie par transpondeur, technologie Wi-Fi, et technologie Bluetooth.

9. Procédé de fabrication d'un récipient (2) obtenu à partir de l'expansion d'au moins une préforme (20) insérée dans un moule (1) et dans lequel il est prévu un appareil de soufflage selon les revendications 2 à 8, **caractérisé en ce qu'**il comprend les étapes suivantes:
- identifier le type de récipient devant être formé en activant lesdits moyens d'identification sur ledit moule (1),
- autoriser et contrôler la fonctionnalité desdits moyens de vérification (3) de l'état de la pression finale dans le récipient (2) à l'intérieur du moule (1),
- mettre en oeuvre le procédé de soufflage et d'évacuation du gaz soufflé à la fin de l'opération de soufflage,
- lire par l'intermédiaire desdits moyens de vérification (3) la valeur de la pression à l'intérieur du moule (1) et/ou du récipient (2), et
- envoyer un signal numérique à ladite unité de commande dudit l'appareil provenant desdits moyens de vérification (3), ledit signal numérique correspondant à la valeur de pression lue à l'intérieur du moule (1),
dans lequel ledit signal numérique peut avoir une première valeur (valeur 1) correspondant à une absence de gaz sous pression à l'intérieur du moule, ou une seconde valeur (valeur 0) correspondant à la présence d'un gaz sous pression à l'intérieur du moule (1),
dans lequel, si la valeur du signal est la seconde valeur (valeur 0), l'ouverture du moule (1) est automatiquement bloquée, et des moyens sont automatiquement actionnés pour éliminer une obstruction qui empêche l'échappement dudit gaz sous pression, ladite opération d'élimination par actionnement des moyens d'élimination est répétée plusieurs fois par consensus cyclique desdits moyens de vérification (3) jusqu'à l'obtention de la première valeur (valeur 1) à travers lesdits moyens de vérification (3), et
dans lequel l'ouverture dudit moule (1) est réalisée uniquement lorsque ledit signal numérique provenant de ces moyens de vérification (3) a la première valeur (valeur 1).

10. Procédé de fabrication d'un récipient (2) obtenu à partir de l'expansion d'au moins une préforme (20) insérée dans un moule (1) selon la revendication précédente, dans lequel ledit récipient (2) est un récipient à double paroi, et ladite au moins une préforme comprend deux préformes (20, 21) insérées l'une dans l'autre.
